# FASCICULE DE BREVET EUROPEEN

(11) **EP 2 658 057 B1**
(45) Date de publication et mention de la délivrance du brevet: **12.11.2014**
(21) Numéro de dépôt: 13305413.0
(22) Date de dépôt: 29.03.2013
(51) Int. Cl.: H02G 3/12

(54) **Dispositif de fixation pour le montage d'un élèment d'appareillage électrique à l'intérieur d'une ouverture pratiquée dans une paroi d'encastrement et ensemble de dispositifs de fixation**
Befestigungsvorrichtung zur Montage eines Elektrogeräteelements im Innern einer Öffnung in einer Einbauwand und Gesamtheit dieser Befestigungsvorrichtungen
Attachment device for mounting an electric switchgear element inside an opening made in a recessing wall and set of attachment devices

(30) Priorité: 24.04.2012 FR 1201209
(43) Date de publication de la demande: 30.10.2013
(73) Titulaire: Legrand France, 87000 Limoges (FR); Legrand SNC, 87000 Limoges (FR)
(72) Inventeur: Laurent, Vincent, 53600 EVRON (FR)
(74) Mandataire: Orsini, Fabienne

(56) Documents cités:
- US-A- 3 115 265
- US-B1- 8 072 779

## Description

### DOMAINE TECHNIQUE AUQUEL SE RAPPORTE L'INVENTION

La présente invention concerne de manière générale le montage d'un élément d'appareillage électrique dans une ouverture pratiquée dans une paroi creuse telle qu'une paroi alvéolaire ou un plancher technique.

L'invention trouve une application particulièrement avantageuse dans le montage d'un élément d'appareillage électrique dans un plancher technique ou dans une paroi d'un bureau dont la configuration ne permet pas à l'installateur d'accéder facilement à la face arrière.

### ARRIERE-PLAN TECHNOLOGIQUE

On connaît déjà des systèmes de vis à griffes qui permettent de monter un appareillage électrique par l'avant d'une paroi creuse. Les vis à griffes sont rapportées dans des aménagements d'une paroi latérale de l'appareillage électrique de sorte que les griffes portées par les vis font saillie vers l'extérieur de l'appareillage. Pour fixer un appareillage électrique dans une paroi creuse, l'installateur introduit ledit appareillage électrique équipé de ses vis à griffes dans l'ouverture de la paroi creuse afin que le bord avant de l'appareillage repose sur la face avant de la paroi. Puis, il visse chaque vis à griffes pour plaquer les griffes contre la face arrière de la paroi creuse.

Un tel système de vis à griffes complexifie l'appareillage électrique qui comprend des aménagements pour accueillir lesdites vis.

En outre, les griffes de fixation ne sont pas adaptées à maintenir un appareillage électrique comprenant au moins une partie mobile par rapport à la paroi dans laquelle il est encastré. En effet, ce type d'appareillage électrique à partie mobile est relativement massif et nécessite une fixation renforcée.

On connaît également un autre système de fixation comprenant deux étriers adaptés à être vissés dans deux joues d'un élément d'appareillage qui émergent de l'ouverture de la paroi creuse à l'arrière de celle-ci. Ce système de fixation nécessite cependant que l'installateur accède à la face arrière de la paroi creuse pour mettre en place les étriers. Dans certains cas, l'installateur doit démonter une partie de la paroi pour accéder à cette face arrière, ce qui n'est pas du tout aisé.

On connaît enfin du document US8072779, un adaptateur prévu pour être fixé sur une plaque mince d'épaisseur connue d'un boîtier d'un appareillage électrique. Cet adaptateur comprend à cet effet des pattes qui s'étendent à partir d'un bord de l'adaptateur, vers l'extérieur d'une ouverture de réception de ladite plaque mince, pour former deux à deux des pinces, dont l'écartement est défini, qui prennent en sandwich le bord de ladite plaque.

Un tel adaptateur n'est pas agencé pour être monté et fixé directement dans la découpe d'un panneau de réception d'épaisseur quelconque. Il ne peut donc pas être utilisé pour être monté dans différents panneaux dont l'épaisseur peut varier du simple au double.

### OBJET DE L'INVENTION

Afin de remédier aux inconvénients de l'état de la technique précité, la présente invention propose un dispositif de fixation pour le montage d'un élément d'appareillage électrique à l'intérieur d'une ouverture pratiquée dans une paroi d'encastrement, qui permet de fixer facilement et solidement l'élément d'appareillage dans la paroi d'encastrement, en accédant uniquement par l'avant de celle-ci, ce dispositif de fixation disparaissant derrière l'élément d'appareillage électrique monté dans l'ouverture de la paroi d'encastrement.

Plus particulièrement, selon l'invention il est prévu un dispositif de fixation selon la revendication 1.

Ainsi, avantageusement, grâce à l'invention, le dispositif de fixation est mis en place dans l'ouverture de la paroi de réception par l'avant de cette paroi, il est maintenu en position dans cette ouverture à l'aide des pattes de maintien, et l'élément d'appareillage peut être aisément monté dans ladite ouverture sur la patte de fixation sans avoir besoin d'accéder à la face arrière de ladite paroi de réception.

D'autres caractéristiques non limitatives et avantageuses du dispositif de fixation conforme à l'invention sont énoncées dans les revendications 2 à 10.

L'invention propose également un ensemble de fixation qui comprend deux dispositifs de fixation complémentaires conforme à l'invention assemblés à coulissement de sorte que les deux embases forment un cadre à dimension variable.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente une vue en perspective éclatée d'un ensemble comprenant deux dispositifs de fixation conformes à l'invention insérés dans une paroi d'encastrement partiellement représentée, un élément d'appareillage et deux vis de fixation ;
- la figure 2 représente une vue en coupe des deux dispositifs de fixation de la figure 1 insérés dans une paroi d'encastrement ;
- la figure 3 est une vue assemblée de la figure 1 ;
- la figure 4 est une vue de dessous d'un ensemble de fixation conforme à l'invention ; et
- la figure 5 représente une variante de réalisation du dispositif de fixation conforme à l'invention.

En préliminaire, on notera que d'une figure à l'autre, les éléments identiques ou similaires des différents modes de réalisation de l'invention seront, dans la mesure du possible, référencés par les mêmes signes de référence et ne seront pas décrits à chaque fois.

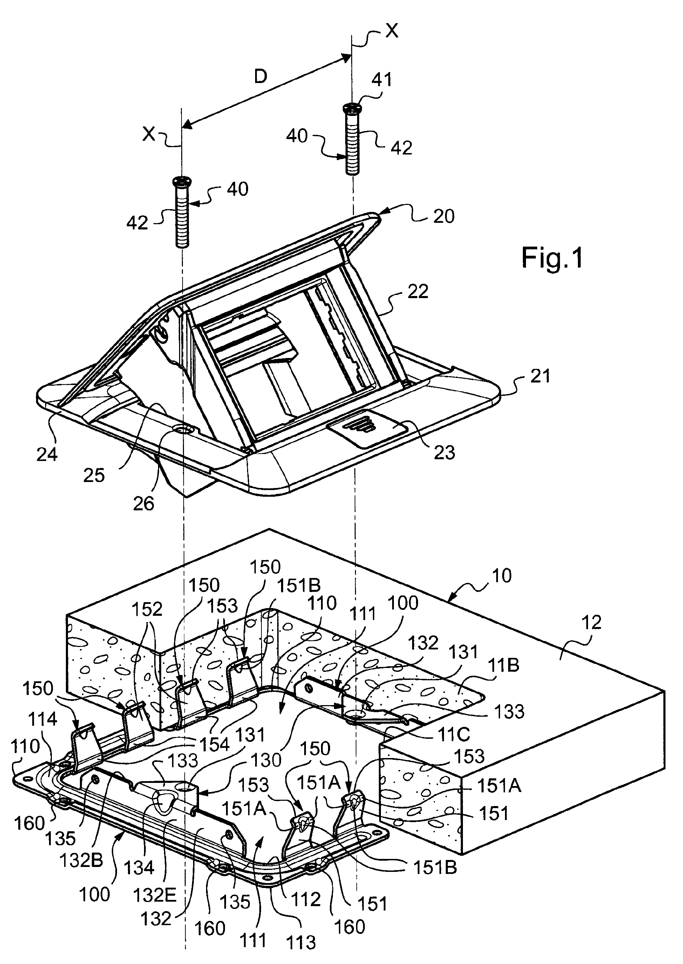

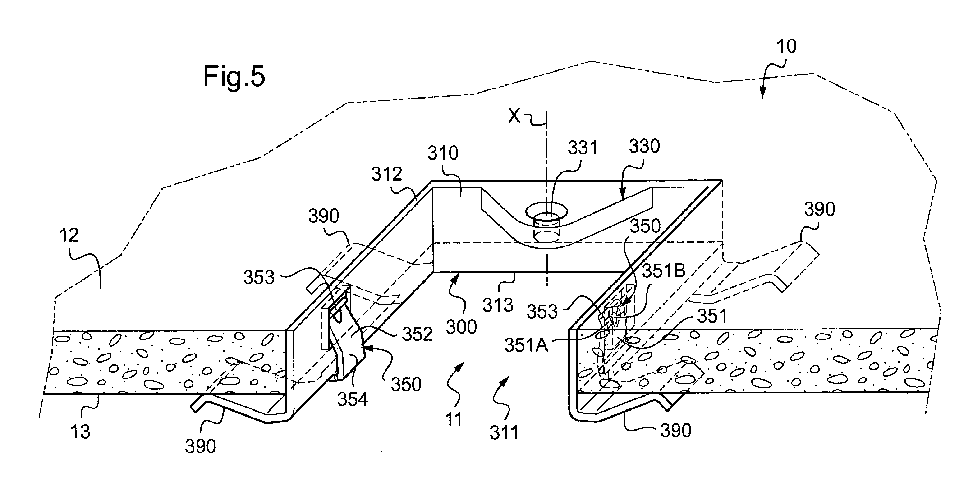

Sur les figures 1 à 4, on a représenté deux modes de réalisation différents de deux dispositifs de fixation 100 ; 200 d'un élément d'appareillage électrique 20 et sur la figure 5, on a représenté un troisième mode de réalisation d'un dispositif de fixation 300 équivalent.

On notera dans la suite de la description, que chaque dispositif de fixation 100 ; 200 ; 300 et l'élément d'appareillage électrique 20 seront décrits tels qu'ils apparaissent à l'utilisateur lorsqu'ils sont montés dans la paroi d'encastrement 10 et que l'élément d'appareillage électrique 20 est accessible à l'utilisateur.

Dans la description, les termes « avant » et « arrière » seront définis par rapport au regard d'un utilisateur. Ainsi, la face avant 12 de la paroi d'encastrement 10 est orientée vers l'utilisateur tandis que sa face arrière 13 est orientée à l'opposé de l'utilisateur.

Ces différents dispositifs de fixation 100 ; 200 ; 300 sont adaptés à être insérés à travers une ouverture 11 pratiquée dans la paroi d'encastrement 10, depuis la face avant 12 de la paroi d'encastrement 10 vers l'arrière pour prendre une position dans laquelle ils sont maintenus à la paroi d'encastrement 10, dite position de maintien détaillée plus en détail par la suite (voir figures 1, 2 et 5).

Selon une caractéristique particulièrement avantageuse, chacun des dispositifs de fixation 100 ; 200 ; 300 représentés sur les figures 1 à 5 comprend :
- une embase 110 ; 210 ; 310 qui forme au moins une portion de cadre délimitant un espace intérieur 111 ; 211 ; 311,
- une patte de fixation 130 ; 230 ; 330 qui s'étend à partir d'un bord 112 ; 212 ; 312 de ladite embase 110 ; 210 ; 310, du côté dudit espace intérieur 111 ; 211 ; 311 de ladite embase 110 ; 210 ; 310, et qui comprend des moyens de montage 131 ; 231 ; 331 pour le montage de l'élément d'appareillage électrique 20 dans ledit espace intérieur 111 ; 211 ; 311, et
- deux pattes de maintien 150 ; 250 ; 350, placées de part et d'autre de la patte de fixation 130 ; 230 ; 330, s'étendant à partir d'un bord 112 ; 212 ; 312 de ladite embase 110 ; 210 ; 310, du côté dudit espace intérieur 111 ; 211 ; 311 de ladite embase 110 ; 210 ; 310 et conformées pour exercer une pression de maintien sur ladite paroi d'encastrement 10, en se déformant élastiquement.

Avantageusement, le dispositif de fixation 100 ; 200 ; 300 est réalisé d'une seule pièce par découpage et pliage d'un feuillard métallique.

Ce feuillard métallique présente ici une épaisseur comprise entre 1 et 4 millimètres.

Selon les modes de réalisation représentés sur les figures 1 à 4, l'embase 110 ; 210 de chaque dispositif de fixation 100 ; 200 est délimitée par un bord interne 112 ; 212 et un bord externe 113 ; 213 qui sont parallèles entre eux de manière que l'embase 110 ; 210 présente une forme sensiblement en U.

Les bords interne 112 ; 212 et externe 113 ; 213 de l'embase 110 ; 210 sont situés dans un même plan. Les pattes de maintien 150 ; 250 et la patte de fixation 130 ; 230 s'étendent à partir du même bord interne 112 ; 212 de l'embase 110 ; 210, sensiblement perpendiculairement à l'embase 110 ; 210 dans une même direction.

Avantageusement, chaque dispositif de fixation 100 ; 200 comprend deux couples de pattes de maintien 150 ; 250 disposés de part et d'autre de la patte de fixation 130 ; 230.

En particulier, l'embase 110 ; 210 en forme de U de chaque dispositif de fixation 100 ; 200 comporte une branche centrale à partir de laquelle s'étend la patte de fixation 130 ; 230 et, de part et d'autre de cette branche centrale, deux branches latérales qui s'étendent en parallèle à partir de la branche centrale. Ici, chaque branche latérale porte un couple de pattes de maintien 150 ; 250, mais on pourrait prévoir que chaque branche latérale ne porte qu'une seule patte de maintien 150 ;250.

Le bord interne 112 ; 212 de l'embase 110 ; 210 de chaque dispositif de fixation 100 ; 200, qui suit le contour en U, délimite l'espace intérieur 111 ; 211 encadré par les branches centrale et latérales, à l'intérieur duquel se positionne l'élément d'appareillage électrique 20.

La patte de fixation 130 ; 230 comporte ici deux platines 132, 133 ; 232, 233 orthogonales entre elles.

La première platine 132 ; 232 de la patte de fixation 130 ; 230 s'étend à partir de l'embase 110 ; 210 perpendiculairement à celle-ci.

La deuxième platine 133 ; 233 de la patte de fixation 130 ; 230 s'étend à partir d'une extrémité libre 132B ; 232B de la première platine 132 ; 232 en porte-à-faux parallèlement à ladite embase 110 ; 210.

Avantageusement, cette deuxième platine 133 ; 233, dite platine de montage, est pourvue desdits moyens de montage 131 ; 231.

Les moyens de montage 131 ; 231 de la platine de montage 133 ; 233 comprennent ici un alésage taraudé 131 ; 231 orienté selon un axe longitudinal X perpendiculaire à la platine de montage 133 ; 233.

A la jonction entre la première platine 132 ; 232 et la platine de montage 133 ; 233, il est prévu un renfoncement 134 formant un renfort pour réduire la déformation de la platine de montage 133 ; 233 lors du vissage de la vis de fixation de l'élément d'appareillage électrique 20 au travers l'alésage taraudé.

La première platine 132 ; 232 comprend en outre deux ouvertures traversantes 135 ; 235 dont les axes sont perpendiculaires à ladite première platine 132 ; 232. Ces deux ouvertures traversantes 135 ; 235 peuvent être traversées par des vis ou des clous de fixation venant s'ancrer dans la paroi d'encastrement 10.

Avantageusement, l'embase 110 ; 210 du dispositif de fixation 100 ; 200 comprend un bossage arrière 114 ; 214 s'étendant de manière continue sur une face de l'embase 110 ; 210 opposée aux pattes de maintien 150 ; 250, sur pratiquement toute la longueur de ladite embase 110 ; 210. Ce bossage arrière 114 ; 214 permet de rigidifier l'embase 110 ; 210.

L'embase 110 ; 210 comporte en outre sur son pourtour des ouvertures de passage 160 ; 260 pour des éléments de fixation (non-représentés) de câbles électriques (non-représentés) tels qu'un collier ou une bride de maintien de câbles.

Ainsi, les câbles électriques connectés au mécanisme d'appareillage électrique peuvent être fixés au dispositif de fixation 100 ; 200 de telle manière qu'ils ne sont ni pincés ni courbés de façon excessive pour assurer une bonne alimentation électrique dudit mécanisme.

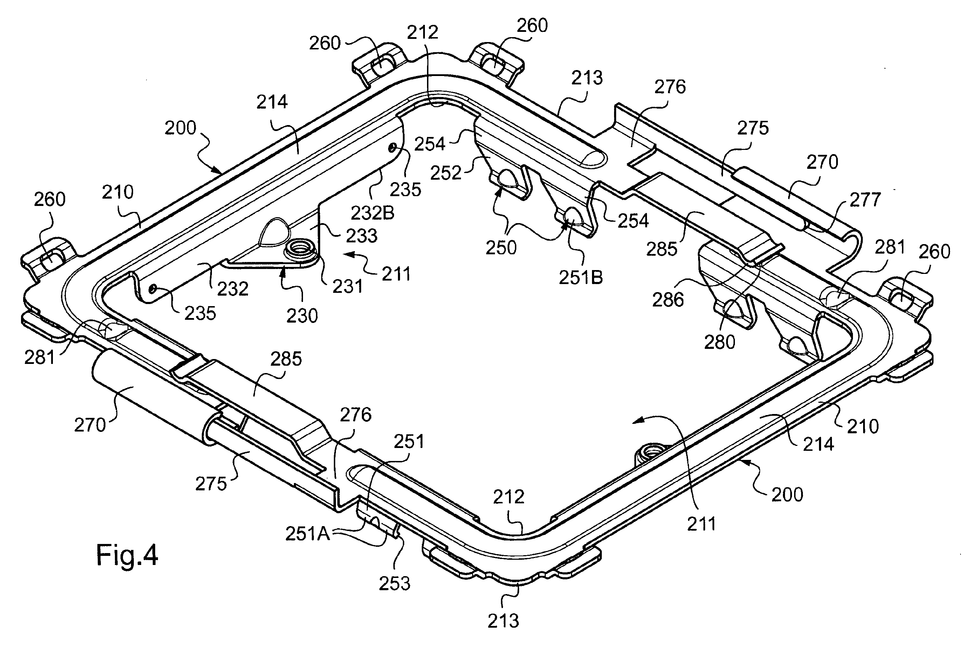

Selon le mode de réalisation représenté sur la figure 4, l'embase 210 de chaque dispositif de fixation 200 comprend à une extrémité une glissière 270 et à l'autre extrémité opposée un coulisseau 275.

La glissière 270 et le coulisseau 275 sont déportés latéralement le long du bord extérieur 213 de l'embase 210 de chaque dispositif de fixation 200.

Plus particulièrement, la glissière 270 est formée par une partie du feuillard métallique qui s'étend à partir du bord extérieur 213 de l'extrémité d'une des branches de l'embase 210, dans le plan défini par l'embase 210, puis qui se courbe pour former un profil en forme de C ouvert vers l'embase 210.

Le coulisseau 275 est une languette qui s'étend à partir de l'extrémité de l'autre branche de l'embase 210 dans le prolongement de ladite branche. Cette languette 275 s'élève en hauteur perpendiculairement à l'embase 210. Elle est rattachée à l'embase 210 par une patte 276 qui s'étend à partir du bord extérieur 213 de l'embase 210 dans le plan défini par l'embase 210.

L'extrémité 277 du coulisseau 275 est préférentiellement arrondie pour permettre un meilleur glissement de ce dernier dans la glissière 270 de l'embase 210 en regard.

Ainsi, lorsque les deux dispositifs de fixation 200 sont assemblés, la glissière 270 d'une embase 210 accueille respectivement le coulisseau 275 de l'autre embase 210 en regard pour former un cadre fermé à dimension variable dont le bord intérieur est constitué par la réunion des deux bords internes 212 qui délimitent l'espace intérieur 211 fermé de réception d'un élément d'appareillage électrique 20.

En outre, selon l'exemple de la figure 4, l'embase 210 de chaque dispositif de fixation 200 comprend, à proximité d'une de ses deux extrémités, un moyen de verrouillage 280, 281 et, à proximité de l'autre extrémité opposée, un moyen de verrouillage complémentaire 285. Ces moyens de verrouillage permettent de verrouiller les deux dispositifs de fixation 200 assemblés dans deux positions extrêmes, à savoir une position rapprochée et une position éloignée.

Ici, le moyen de verrouillage 280, 281 est formé dans la face arrière de la branche de l'embase 210 portant la glissière 270 et le moyen de verrouillage complémentaire 285 est formé dans la branche de l'embase 210 comportant le coulisseau 275.

Le moyen de verrouillage 280, 281 de l'embase 210 comprend deux creux 280, 281 distincts qui sont formés sur une partie de la largeur de l'embase 210 entre le bord interne 212 et le bord externe 213 de la branche de l'embase 210.

Ces deux creux 280, 281 sont espacés d'une distance égale à 22,5 millimètres.

Le moyen de verrouillage complémentaire 285 de l'embase 210 comprend un bras 285 qui s'étend à partir de l'extrémité libre de la branche correspondante de l'embase 210 dans un plan parallèle au plan de l'embase 210.

L'extrémité libre de ce bras 285 comprend une bosse 286 de forme complémentaire à celle desdits creux 280, 281.

Comme le montre la figure 4, les deux dispositifs de fixation 200 sont assemblés dans la position éloignée dans laquelle le premier creux 280 positionné à proximité de l'extrémité libre de la branche de chaque embase 210 accueille respectivement la bosse 286 du bras 285 de l'autre embase 210.

Les deux dispositifs de fixation sont assemblés dans la position rapprochée lorsque le deuxième creux 281 positionné à l'autre extrémité opposée de la branche de chaque embase 210 accueille la bosse 286 du bras 285 de l'autre embase 210.

Le dispositif de fixation 100 représenté sur les figures 1 à 3 est dépourvu de cet agencement de glissière et de coulisseau. Ainsi, lorsque deux dispositifs de fixation 100 sont en regard, ils forment ensemble un cadre ouvert à dimension variable dont le bord intérieur est constitué par la réunion des deux bords internes 112 qui délimitent l'espace intérieur 111 ouvert de réception d'un élément d'appareillage électrique 20.

Le troisième mode de réalisation du dispositif de fixation 300 représenté sur la figure 5 diffère des deux premiers modes de réalisation décrits précédemment dans le sens où il comporte une embase 310 en forme de U délimitée par deux bords parallèles 312, 313 situés dans deux plans distincts parallèles et les pattes de maintien 350 s'étendent à partir d'un des deux bords 312, 313 de l'embase 310 tandis que la patte de fixation 350 s'étend à partir de l'autre des deux bords 312, 313 de l'embase 310.

Avantageusement, la patte de fixation 330 s'étend perpendiculairement à l'embase 310 dans l'espace intérieur 311 de l'embase 310. Cette patte de fixation 330 comprend ici un alésage taraudé 331 s'étendant selon un axe longitudinal X perpendiculaire à ladite patte de fixation 330.

Chaque patte de maintien 350 décrite plus en détails par la suite s'étend ici sensiblement parallèlement au plan défini par l'embase 310.

Mais, ici tout comme dans les modes de réalisation décrits précédemment, l'embase 310 en forme de U du dispositif de fixation 300 comporte une branche centrale à partir de laquelle s'étend la patte de fixation 330 dans l'espace intérieur 311 et, de part et d'autre de cette branche centrale, deux branches latérales qui s'étendent en parallèle à partir de la branche centrale. Ici, chaque branche latérale porte une seule patte de maintien 350. Plus particulièrement, chaque patte de maintien 350 s'étend parallèlement au plan de la branche latérale de l'embase 310 qui la porte, principalement dans l'espace intérieur 311.

Les bords parallèles 312, 313 de l'embase 310 du dispositif de fixation 300 qui suivent le contour en U, délimitent l'espace intérieur 311 encadré par les branches centrale et latérales, à l'intérieur duquel se positionne l'élément d'appareillage électrique.

Le dispositif de fixation 300 comprend en outre des bras de retenue 390 s'étendant à partir du même bord 313 que les pattes de maintien 350, perpendiculairement à l'embase 310 vers l'extérieur de l'embase 310.

Dans tous les modes de réalisation représentés sur les figures 1 à 5, les pattes de maintien 150 ; 250 ; 350 comportent une forme similaire avec un renflement courbe 154 ; 254 ; 354 qui les rattache à l'embase 110 ; 210 ; 310.

Selon une caractéristique particulièrement avantageuse de l'invention, chaque patte de maintien 150 ; 250 ; 350 présente une forme globale sensiblement en S pour permettre une déformation élastique du renflement courbe 154 ; 254 ; 354 de la patte de maintien 150 ; 250 ; 350.

On entend par « déformation élastique » une déformation permettant à une extrémité libre 153 ; 253 ; 353 de la patte de maintien 150 ; 250 ; 350 de se déplacer de quelques millimètres vers l'espace intérieur 111 ; 211 ; 311 de l'embase 110 ; 210 ; 310.

Cette déformation dépend du matériau constituant la patte de maintien 150 ; 250 ; 350. Ici, les pattes de maintien 150 ; 250 ; 350 sont constituées d'un matériau métallique qui permet de déplacer l'extrémité libre 153 ; 253 ; 353 de la patte de maintien 150 ; 250 ; 350 d'environ 3 millimètres depuis sa position de repos vers sa position déformée.

Chaque patte de maintien 150 ; 250 ; 350 comprend un ventre 152 ; 252 ; 352 orienté vers l'espace intérieur 111 ; 211 ; 311 de l'embase 110 ; 210 ; 310 et un dos 151 ; 251 ; 351 opposé au ventre 152 ; 252 ; 352.

Une partie du dos 151 ; 251 ; 351 de chaque patte de maintien 150 ; 250 ; 350 est destinée à prendre appui sur la paroi d'encastrement 10. Plus particulièrement, le dos 151 ; 251 ; 351 comprend à une extrémité de la forme en S de la patte de maintien 150 ; 250 ; 350 deux zones d'appuis 151 A ; 251 A ; 351 A séparées entre elles par un renfoncement 151 B, 251 B, 351 B.

Chaque renfoncement 151B, 251B, 351B est ici prévu pour rigidifier l'extrémité libre 153 ; 253 ; 353 de la patte de maintien 150 ; 250 ; 350 destinée à se déplacer et ainsi permettre une meilleure déformation élastique du renflement courbe 154 ; 254 ; 354 de la patte de maintien 150 ; 250 ; 350.

Selon une variante non représentée, on pourrait envisager des pattes de maintien comportant une multitude de zones d'appui permettant de réaliser ainsi une multitude de liaisons ponctuelles avec la face interne de la paroi d'encastrement en regard et améliorer ainsi le maintien en position du dispositif de fixation dans l'ouverture de la paroi d'encastrement.

Nous allons maintenant décrire la mise en place du dispositif de fixation 100 représenté sur les figures 1 à 3 dans l'ouverture 11 de la paroi d'encastrement 10.

Cette ouverture 11 comprend quatre faces internes 11 A, 11 B, 11C, 11 D présentant un contour carré ou rectangle mais on pourrait également prévoir, selon d'autres variantes non représentées que le contour de l'ouverture soit circulaire ou ovale.

L'installateur insère un premier dispositif de fixation 100 par l'avant dans l'ouverture 11 pratiquée dans la paroi d'encastrement 10 de manière qu'il adopte la position de maintien.

Dans cette position de maintien, la face avant de l'embase 110, c'est-à-dire la face orientée vers les pattes de maintien 150, est au moins partiellement en contact avec la face arrière 13 de la paroi d'encastrement 10, les pattes de maintien 150 exercent une pression de maintien contre deux faces internes 11 A, 11C en regard de l'ouverture 11, et, une face extérieure 132E de la première platine 132 de la patte de fixation 130 est en contact avec la troisième face interne 11 B de l'ouverture 11 perpendiculaire aux deux premières.

L'installateur insère alors de la même manière un second dispositif de fixation 100 dans l'ouverture 11 de sorte que, en position de maintien, la face extérieure 132E de la première platine 132 de la patte de fixation 130 est en contact avec une quatrième face interne 11D de l'ouverture 11 opposée à la troisième face interne 11 B de l'ouverture 11.

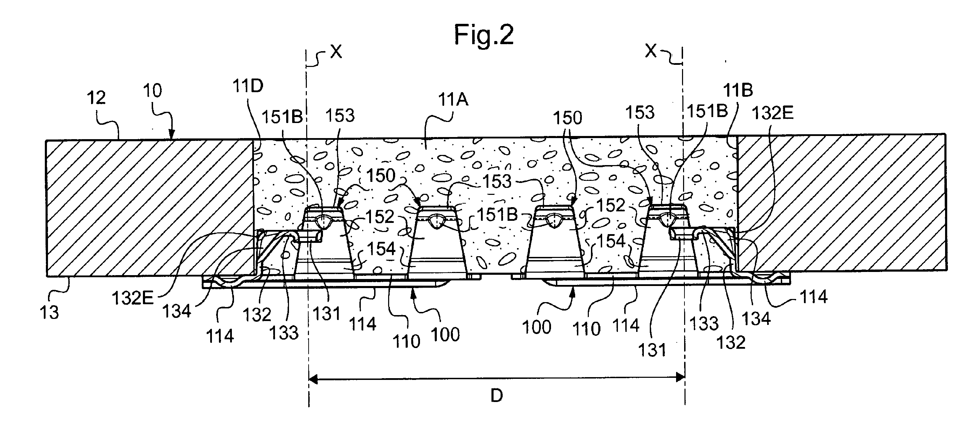

Lorsque les premier et second dispositifs de fixation 100 sont dans leur position de maintien respective (voir figure 2), ils forment un cadre dont l'espace intérieur, formé par la réunion des deux espaces intérieurs 111, est adapté à accueillir une partie d'un élément d'appareillage électrique 20. Les deux platines de montage 133 des deux pattes de fixation 130 des deux dispositifs de fixation 100 se font face à l'intérieur dudit espace intérieur.

Ici, les premier et second dispositifs de fixation 100 reste mobiles l'un par rapport à l'autre pour former un cadre ouvert de manière que la distance séparant le centre des deux alésages taraudés 131 des platines de montage 133 des pattes de fixation 130 des deux dispositifs de fixation 100 soit égal au jeu près, à une distance d'entraxe D prédéterminée correspondant à l'élément d'appareillage électrique 20.

Avantageusement, l'ensemble de fixation comprenant les deux dispositifs de fixation 100 est adapté à s'insérer dans différentes dimensions d'ouvertures pratiquées dans une paroi d'encastrement correspondant à des distances d'entraxe D de différents éléments d'appareillage électrique 20.

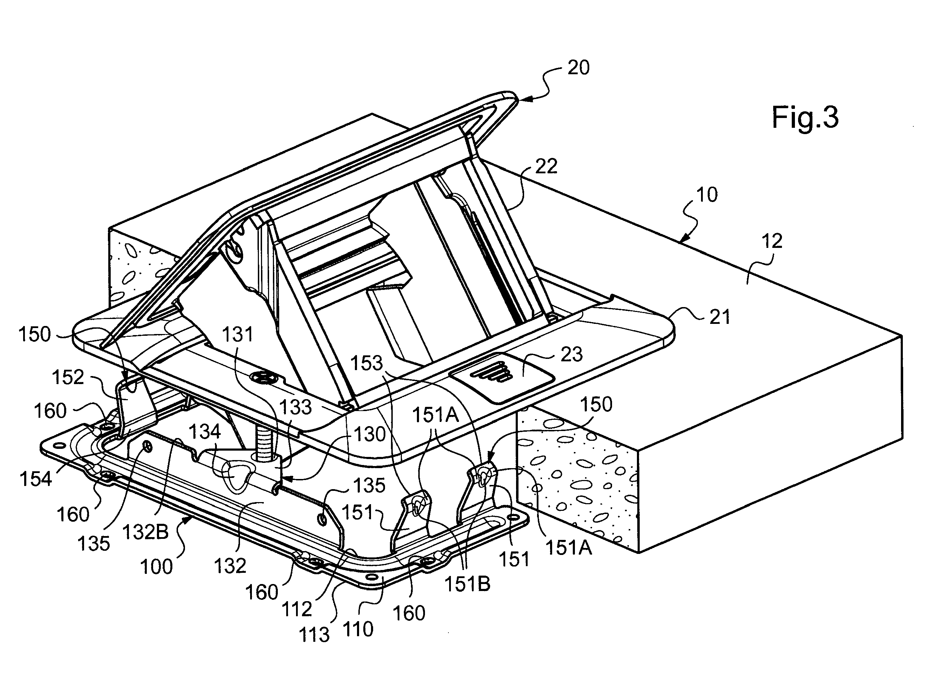

Comme le montrent les figures 1 et 3, après avoir placé les deux dispositifs de fixation 100 en position de maintien dans l'ouverture 11 de la paroi d'encastrement 10, l'installateur insère l'élément d'appareillage électrique 20 dans l'ouverture 11 et le fixe aux deux dispositifs de fixation 100 à l'aide de deux vis de fixation 40.

Classiquement, comme le montre la figure 1, chaque vis de fixation 40 comprend une tête de manoeuvre 41 et un corps 42 cylindrique fileté qui s'étend suivant un axe longitudinal X.

Comme le montre plus particulièrement la figure 1, l'élément d'appareillage électrique 20 comprend ici une plaque de finition 21, un support d'appareillage 22 basculant destiné à recevoir au moins un mécanisme d'appareillage électrique (non représenté) et un bouton de déverrouillage 23 du support d'appareillage 22 basculant pour lui permettre de passer d'une position rabattue à une position déployée dans laquelle la partie fonctionnelle du mécanisme d'appareillage électrique est rendue accessible à un utilisateur.

La plaque de finition 21 est avantageusement réalisée en matière métallique.

Cette plaque de finition 21 se présente sous la forme d'un cadre relativement plat dont le bord extérieur 24 suit ici le contour carré de l'ouverture 11 pratiquée dans la paroi d'encastrement 10. Bien entendu, en variante, on pourrait prévoir que la plaque de finition 21 présente un contour extérieur rectangulaire ou circulaire. La plaque de finition 21 comprend une surface d'appui (non visible sur les figures) qui est destinée à s'appliquer contre une partie de la face avant 12 de la paroi d'encastrement 10 (voir figure 3).

Selon l'exemple représenté sur les figures 1 et 3, un bord intérieur 25 de la plaque de finition 21 délimite une ouverture centrale rectangulaire destinée à accueillir le support d'appareillage 22 basculant mais on pourrait également prévoir, selon d'autres variantes non représentées, que ce bord intérieur délimite une ouverture carrée ou circulaire ou que le support d'appareillage soit fixe par rapport à la plaque de finition.

La plaque de finition 21 est traversée par deux alésages 26 qui sont disposés dans deux côtés parallèles de la plaque de finition. Chaque alésage 26 est adapté à être traversé par une vis de fixation 40. Les axes de alésages 26 sont séparés d'une distance d'entraxe D qui varie en fonction de l'élément d'appareillage 20. La distance d'entraxe D peut être comprise entre 50 et 300 millimètres. Préférentiellement, elle est ici comprise entre 84 et 106,5 millimètres pour un élément d'appareillage 20 monoposte.

Lorsque l'élément d'appareillage 20 est inséré dans l'ouverture 11 de la paroi 10, les alésages 26 de la plaque de finition 21 sont positionnés dans l'alignement des alésages taraudés 131 des platines de montage 133 des pattes de fixation 130 des dispositifs de fixation 100.

L'installateur visse alors la vis de fixation 40 au travers des alésages 26, 131, ce qui a pour effet de plaquer l'embase 110 desdits dispositifs de fixation 100 contre la face arrière de la paroi d'encastrement 10.

La paroi d'encastrement 10 est donc pincée et prise en sandwich entre la plaque de finition 21 de l'élément d'appareillage électrique 20 et les embases 110 des dispositifs de fixation 100.

Avant d'insérer l'ensemble de fixation représenté sur la figure 4 dans l'ouverture de la paroi d'encastrement, l'installateur place les deux dispositifs de fixation 200 assemblés dans la position rapprochée pour faciliter le passage de l'ensemble de fixation à travers l'ouverture 11.

De la même manière que pour le dispositif de fixation 100, il place l'ensemble de fixation formé par les deux dispositifs de fixation 200 assemblés en position de maintien dans l'ouverture 11 de la paroi d'encastrement 10.

Puis, il fait éventuellement varier la dimension du cadre fermé en coulissant l'un des dispositifs de fixation 200 par rapport à l'autre, pour qu'elle s'adapte à la dimension de l'ouverture de la paroi d'encastrement. Puis, de manière analogue, il visse l'élément d'appareillage électrique sur les dispositifs de fixation 200 de l'ensemble de fixation en position de maintien dans l'ouverture de la paroi d'encastrement.

De manière analogue au dispositif de fixation 100 représenté sur les figures 1 à 3, le dispositif de fixation 300 représenté sur la figure 5 est inséré dans l'ouverture 11 de la paroi d'encastrement 10 pour qu'il adopte sa position de maintien.

Dans cette position de maintien, d'une part, trois faces extérieures de l'embase 310 du dispositif de fixation 300, c'est-à-dire les faces orientées à l'opposées de l'espace intérieur 311 délimitée par l'embase 310, sont respectivement en contact avec trois faces internes de l'ouverture 11, et d'autre part, les bras de retenue 390 sont au moins partiellement en appui contre la face arrière 13 de la paroi d'encastrement 10.

Pour former un cadre ouvert à dimension variable, deux dispositifs de fixations 300 sont insérés en regard l'un par rapport à l'autre dans l'ouverture 11 de la paroi d'encastrement 10 dans la position de maintien.

L'installateur insère alors un élément d'appareillage électrique (non-représenté), puis visse les vis de fixation dans les alésages taraudés 331 des dispositifs de fixation 300, ce qui a pour effet de plaquer les bras de retenue 390 desdits dispositifs de fixation contre la face arrière de la paroi d'encastrement 10.

La paroi d'encastrement 10 est donc pincée et prise en sandwich entre l'élément d'appareillage électrique 20 et les bras de retenue 390 des dispositifs de fixation 300.

## Revendications

1. Dispositif de fixation (100 ; 200 ; 300) pour le montage d'un élément d'appareillage électrique (20) à l'intérieur d'une ouverture (11) pratiquée dans une paroi d'encastrement (10), ce dispositif de fixation (100 ; 200 ; 300) comprenant :
- une embase (110 ; 210 ; 310) qui forme au moins une portion de cadre délimitant un espace intérieur (111 ; 211 ; 311),
- une patte de fixation (130 ; 230 ; 330) qui s'étend à partir d'un bord (112 ; 212 ; 312) de ladite embase (110 ; 210 ; 310) et qui comporte des moyens de montage (131 ; 231 ; 331) pour le montage de l'élément d'appareillage électrique (20) dans ledit espace intérieur (111 ; 211 ; 311), et
- deux pattes de maintien (150 ; 250 ; 350), placées de part et d'autre de la patte de fixation (130 ; 230 ; 330), s'étendant à partir d'un bord (112 ; 212 ; 313) de ladite embase (110 ; 210 ; 310)
**caractérisé en ce que** :
- la patte de fixation (130; 230; 330) s'étend du côté dudit espace intérieur (111; 211; 311) de ladite embase (110; 210; 310), et
- les deux pattes de maintien (150; 250; 350) s'étendent du côté dudit espace intérieur (111; 211; 311) de ladite embase (110; 210; 310), et sont conformées pour exercer une pression de maintien sur ladite paroi d'encastrement (10), en se déformant élastiquement.

2. Dispositif de fixation (100 ; 200 ; 300) selon la revendication 1, dans lequel chaque patte de maintien (150 ; 250 ; 350) présente un profil courbe sensiblement en forme de S.

3. Dispositif de fixation (100 ; 200 ; 300) selon l'une des revendications 1 et 2, dans lequel il est prévu deux couples de pattes de maintien (150 ; 250 ; 350) disposés de part et d'autre de la patte de fixation (130 ; 230 ; 330).

4. Dispositif de fixation (100 ; 200) selon l'une des revendications précédentes, dans lequel l'embase (110 ; 210) étant délimitée par deux bords parallèles (112, 113 ; 212, 213) situés dans un même plan, les pattes de maintien (150 ; 250) et la patte de fixation (130 ; 230) s'étendent à partir du même bord interne (112 ; 212) de l'embase (110 ; 210).

5. Dispositif de fixation (100 ; 200) selon la revendication 4, dans lequel la patte de fixation (130 ; 230) comprend une partie de montage (133 ; 233) pourvue desdits moyens de montage (131 ; 231), qui s'étend parallèlement à ladite embase (110 ; 210).

6. Dispositif de fixation (300) selon l'une des revendications 1 à 3, dans lequel l'embase (310) étant délimitée par deux bords parallèles (312, 313) situés dans deux plans distincts parallèles, les pattes de maintien (350) s'étendent à partir d'un des deux bords (313) de l'embase (310) tandis que la patte de fixation (330) s'étend à partir de l'autre des deux bords (312) de l'embase (310).

7. Dispositif de fixation (300) selon la revendication 6, dans lequel la patte de fixation (330) comprend une partie de montage pourvue desdits moyens de montage (331), qui s'étend perpendiculairement à ladite embase (310).

8. Dispositif de fixation (100 ; 200 ; 300) selon l'une des revendications précédentes, dans lequel l'embase (110 ; 210 ; 310) comporte sur son pourtour des ouvertures de passage (135 ; 235) pour des éléments de fixation de câbles électriques.

9. Dispositif de fixation (100 ; 200 ; 300) selon l'une des revendications précédentes, qui est réalisé d'une seule pièce par découpage et pliage d'un feuillard métallique.

10. Dispositif de fixation (200) selon l'une des revendications précédentes, dans lequel l'embase (210) comporte à une extrémité une glissière (270) et à l'autre extrémité opposée un coulisseau (275).

11. Ensemble de fixation qui comprend deux dispositifs de fixation (200) complémentaires selon la revendication 10, assemblés à coulissement de sorte que les deux embases (210) forment un cadre à dimension variable.

## Patentansprüche

1. Befestigungsvorrichtung (100; 200; 300) für die Montage eines elektrischen Geräteelements (20) in einer, in einer Einbauwand (10) eingearbeiteten Öffnung (11), wobei diese Befestigungsvorrichtung (100; 200; 300) umfasst:
- einen Sockel (110; 210; 310), der mindestens einen Abschnitt des Rahmens bildet, welcher einen Innenraum (111; 211; 311) abgrenzt,
- eine Befestigungslasche (130; 230; 330), die sich ausgehend von einem Rand (112; 212; 312) dieses Sockels (110; 210; 310) erstreckt und Montagemittel (131; 231; 331) für die Montage des elektrischen Geräteelements (20) in diesem Innenraum (111; 211; 311) umfasst, und
- zwei auf beiden Seiten der Befestigungslasche (130; 230; 330) angebrachte Haltelaschen (150; 250; 350), die sich ausgehend von einem Rand (112; 212; 313) dieses Sockels (110; 210; 310) erstrecken, **dadurch gekennzeichnet, dass**:
- sich die Befestigungslasche (130; 230; 330) auf der Seite des Innenraums (111; 211; 311) dieses Sockels (110; 210; 310) erstreckt, und
- sich die zwei Haltelaschen (150; 250; 350) auf der Seite des Innenraums (111; 211; 311) dieses Sockels (110; 210; 310) erstrecken, und sich dazu eignen, auf die Einbauwand (10) einen Haltedruck auszuüben, indem sie sich elastisch verformen.

2. Befestigungsvorrichtung (100; 200; 300) nach Anspruch 1, bei der jede Haltelasche (150; 250; 350) ein gewölbtes Profil mit annähernder S-Form aufweist.

3. Befestigungsvorrichtung (100; 200; 300) nach einem der Ansprüche 1 und 2, bei der zwei Paare von Haltelaschen (150; 250; 350) vorgesehen sind, die auf beiden Seiten der Befestigungslasche (130; 230; 330) angebracht sind.

4. Befestigungsvorrichtung (100; 200) nach einem der vorausgehenden Ansprüche, bei der der Sockel (110; 210) durch zwei parallele Ränder (112; 113; 212; 213) abgegrenzt ist, die sich in derselben Ebene befinden, wobei sich die Haltelaschen (150; 250) und die Befestigungslasche (130; 230) ausgehend vom selben inneren Rand (112; 212) des Sockels (110; 210) erstrecken.

5. Befestigungsvorrichtung (100; 200) nach Anspruch 4, bei der die Befestigungslasche (130; 230) einen mit diesen Montagemitteln (131; 231) versehenen Montageabschnitt (133; 233) umfasst, der sich parallel zum Sockel (110; 210) erstreckt.

6. Befestigungsvorrichtung (300) nach einem der Ansprüche 1 bis 3, bei der der Sockel (310) durch zwei parallele Ränder (312; 313) abgegrenzt ist, die sich in zwei verschiedenen parallelen Ebenen befinden, wobei sich die Haltelaschen (350) ausgehend von einem der beiden Ränder (313) des Sockels (310) erstrecken, während sich die Befestigungslasche (330) ausgehend vom anderen der beiden Ränder (312) des Sockels (310) erstreckt.

7. Befestigungsvorrichtung (300) nach Anspruch 6, bei der die Befestigungslasche (330) einen mit diesen Montagemitteln (331) versehenen Montageabschnitt umfasst, der sich senkrecht zu diesem Sockel (310) erstreckt.

8. Befestigungsvorrichtung (100; 200; 300) nach einem der vorausgehenden Ansprüche, bei der der Sockel (110; 210; 310) an seiner Außenlinie Durchführöffnungen (135; 235) für Befestigungselemente von Elektrokabeln umfasst.

9. Befestigungsvorrichtung (100; 200; 300) nach einem der vorausgehenden Ansprüche, die durch Zuschneiden und Falten eines Metallbands aus einem einzigen Teil hergestellt wird.

10. Befestigungsvorrichtung (200) nach einem der vorausgehenden Ansprüche, bei der der Sockel (210) an einem Ende eine Schiene (270) und am anderen, gegenüberliegenden Ende einen Schieber (275) umfasst.

11. Befestigungssystem, das zwei komplementäre Befestigungsvorrichtungen (200) nach Anspruch 10 umfasst, die derart gleitend miteinander verbunden sind, dass die beiden Sockel (210) einen Rahmen mit variabler Größe bilden.

## Claims

1. A fastener device (100; 200; 300) for mounting an electrical-equipment element (20) inside an opening (11) formed in a cavity wall (10), the fastener device (100; 200; 300) comprising:
· a base (110; 210; 310) that forms at least one frame portion that defines an inside space (111; 211; 311);
· a fastener tab (130; 230; 330) that extends from an edge (112; 212; 312) of said base (110; 210; 310) and that includes mounting means (131; 231; 331) for mounting the electrical-equipment element (20) in said inside space (111; 211; 311); and
· two holding tabs (150; 250; 350), placed on either side of the fastener tab (130; 230; 330), extending from an edge (112; 212; 313) of said base (110; 210; 310);
said fastener device being **characterized in that**:
· the fastener tab (130; 230; 330) extends from said base (110; 210; 310) beside said inside space (111; 211; 311); and
· the two holding tabs (150; 250; 350) extend from said base (110; 210; 310) beside said inside space (111; 211; 311) and are shaped so as to exert a holding pressure on said cavity wall (10), deforming elastically.

2. A fastener device (100; 200; 300) according to claim 1, wherein each holding tab (150; 250; 350) presents a curved profile that is substantially S-shaped.

3. A fastener device (100; 200; 300) according to claim 1 or claim 2, wherein it is provided with two pairs of holding tabs (150; 250; 350) arranged on either side of the fastener tab (130; 230; 330).

4. A fastener device (100; 200) according to any preceding claim, wherein the base (110; 210) is defined by two parallel edges (112, 113; 212, 213) that are situated in a single plane, and the holding tabs (150; 250) and the fastener tab (130; 230) extend from the same inner edge (112; 212) of the base (110; 210).

5. A fastener device (100; 200) according to claim 4, wherein the fastener tab (130; 230) comprises a mounting portion (133; 233) that is provided with said mounting means (131; 231) and that extends parallel to said base (110; 210).

6. A fastener device (300) according to any one of claims 1 to 3, wherein the base (310) is defined by two parallel edges (312, 313) that are situated in two parallel distinct planes, and the holding tabs (350) extend from one of the two edges (313) of the base (310) while the fastener tab (330) extends from the other of the two edges (312) of the base (310).

7. A fastener device (300) according to claim 6, wherein the fastener tab (330) comprises a mounting portion that is provided with said mounting means (331) and that extends perpendicularly to said base (310).

8. A fastener device (100; 200; 300) according to any preceding claim, wherein the base (110; 210; 310) includes through openings (135; 235) in its periphery for passing fastener elements for fastening electric cables.

9. A fastener device (100; 200; 300) according to any preceding claim, which fastener device is made as a single piece by cutting and bending a metal sheet.

10. A fastener device (200) according to any preceding claim, wherein the base (210) includes a slideway (270) at one end, and a slider (275) at the opposite other end.

11. A fastener assembly that comprises two complementary fastener devices (200) according to claim 10, assembled to slide so that the two bases (210) form a frame of variable size.
